# EUROPEAN PATENT APPLICATION

(11) **EP 4 815 240 A1**
(43) Date of publication of application: **30.09.2026**
(21) Application number: 25167094.9
(22) Date of filing: 28.03.2025
(51) Int. Cl.: H02J 3/18, H02J 3/26, H02M 7/00

(54) **COORDINATED CURRENT AND VOLTAGE BALANCING CONTROL USING HT (HYBRID TRANSFORMER), ESPECIALLY IN DISTRIBUTION NETWORKS**

(71) Applicant: Hitachi Energy Ltd, 8050 Zürich (CH)
(72) Inventor: ALVES, Roberto, 722 14 Västerås (SE); TAYYEBI, Ali, 723 59 Västerås (SE); MOGOROVIC, Marko, 1205 Geneva (CH); KHAN, Akif Zia, 31-416 Krakow (PL); CAL, Jerzy, 94-056 Lodz (PL); ROSSELET, Adrien, 1004 Lausanne (CH)
(74) Representative: Vossius & Partner Patentanwälte Rechtsanwälte mbB

(57) **Abstract**

The disclosure provides a method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising: obtaining: a first voltage of each of the plurality of phases of the electric line at a first point of common coupling, PCC, where the shunt connected converter is connected to the electric line in shunt, a second voltage of each of the plurality of phases of the electric line at a second PCC, where the first transformer is connected to the electric line, and a first current of each of the plurality of phases of the electric line at the second PCC; determining a voltage imbalance and/or a current imbalance based on the obtained first voltage, second voltage and/or first current; and controlling, based on the determined voltage imbalance and/or current imbalance, the shunt connected converter to inject an injection current and/or the series connected converter to inject an injection voltage for balancing the magnitudes and/or phase angles of a voltage and/or a current between the plurality of phases of the electric line.

## Description

The present disclosure relates to method for controlling a hybrid transformer (HT) and a HT system.

Driven by climate change concerns, the power system has been transitioning to net-zero state in recent years. This transition is highlighted by the replacement of synchronous machines by power-electronics-based converters and systems. An indirect implication of removing synchronous machines from the power system is the fact that the hierarchical grid control is changing from a centralized to a distributed configuration. Therefore, not only the generators but also other grid components are expected to provide certain stabilizing services to the grid. In this disclosure, it is focused, inter alia, on a Hybrid Transformer (HT or power-electronics enhanced transformer (PEET)) and its application for the grid-balancing services is highlighted.

An unbalanced current and/or voltage conditions can occur due to a wide range of factors in distributed grids, e.g., unbalanced loads, faults, or single-phase loads or distributed generation. When considering classic transformers, the balancing objective is often met by using a dedicated unit, for instance, a STATCOM or a centralized battery energy storage system (BESS). Both voltage and current imbalances are parameters that are monitored in distribution networks. In general, voltage imbalances are due to unbalanced loads connected to weak systems. Voltage imbalances affect other loads connected at the point of common coupling (PCC) (i.e. motors, single-phase loads, etc.). In strong distribution systems, with high short-circuit powers at the PCC, the main drawback of current imbalances is increased losses.

The above-mentioned disadvantages are at least partly overcome and/or advantages mentioned herein are at least partly achieved with the features of the independent claims. Dependent claims define preferred embodiments of the present disclosure.

The present disclosure shows a method for controlling a hybrid transformer (HT) and a HT system.

The present disclosure relates to a method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer; wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising: obtaining: a first voltage of each of the plurality of phases of the electric line at a first point of common coupling, PCC, where the shunt connected converter is connected to the electric line in shunt, a second voltage of each of the plurality of phases of the electric line at a second PCC, where the first transformer is connected to the electric line, and a first current of each of the plurality of phases of the electric line at the second PCC; determining a voltage imbalance and/or a current imbalance based on the obtained first voltage, second voltage and/or first current; and controlling, based on the determined voltage imbalance and/or current imbalance, the shunt connected converter to inject an injection current and/or the series connected converter to inject an injection voltage for balancing the magnitudes and/or phase angles of a voltage and/or a current between the plurality of phases of the electric line.

This method may be employed for current/voltage-balancing control systems and for the use of HTs throughout power grids. Although this is particularly interesting for HT applications in medium voltage (MV), the proposed method may also be used in high voltage (HV) and/or low voltage (LV) applications. The HV/MV/LV application may be that the electric line is in HV/MV/LV, respectively, and/or that the electric line is part of a power grid in HV/MV/LV, respectively. The method can enhance the functionalities of an HT to provide flexibility to an AC transmission system (FACTs device) for dynamic current/voltage balance control systems.

Obtaining the first voltage, second voltage and/or first current may be done by measuring, estimating, calculating and/or receiving. The first current may be calculated by a current at the first PCC and a current injected by the shunt connected converter (possibly via the second transformer, described later). When the first voltage, second voltage and/or first current are measured, corresponding measurement devices may be present at the corresponding first/second PCC. The first voltage, second voltage and/or first current may be time series data.

The connections mentioned may each be direct (only conductor and/or node(s) in between) or indirect (further electrical elements are connected in between).

The plurality of phases of the electric line may be three phases or another number of phases. In this disclosure, generally three phases are mentioned. This could be exchanged with another number of phases bigger than one. The first PCC and the second PCC, each, may have three phases. Preferably, one HT may balance all three phases as a three-phase converter.

The HT may be a device connected to the distribution network. In some embodiments, the HT may be connected to two networks, for example, MV and LV networks or HV and LV networks. The HT may contribute to balancing both networks. The HT may contribute to balance electrical quantities in both grids. A network may be the same as a grid.

The first transformer may also be referred to as trimming transformer (TT). The first voltage may be referred to as grid voltage. The second voltage may be referred to as load voltage. The first current may be referred to as load current.

In some embodiments, the shunt connected converter may be controlled based on voltage imbalance and/or current imbalance which are determined based on the first voltage and the first current, but not based on the second voltage. The shunt connected converter may function for/as Q injection (PF or V regulation), active current filter (Ih), short term P injection (inertia emulation), power quality (sags, dips, swells, etc.) enhancer, and/or batteries/supercaps (which may be in the ESS in the DC link) charger.

In some embodiments, the series connected converter may be controlled based on voltage imbalance and/or current imbalance which are determined based on the second voltage and the first current, but not based on the first voltage. The series connected converter may function for/as voltage regulation (DV injection at any angle), short term P injection, system impedance regulation, active voltage filter (Vh), power quality (sags, dips, swells, etc.) enhancer, and/or batteries/supercaps (which may be in the ESS in the DC link) charger.

The DC link connecting the DC side of the shunt connected converter to the DC side of the series connected may constitute a back-to-back connection of the shunt connected converter and the series connected converter.

Balancing may be adjusting the voltage and/or current of the (three) different phases, possibly without changing the overall amplitude and/or power in the electric line. The voltage and/or current may be balanced by injecting voltage and/or current. Injecting current may change the balance-imbalance of the current and the voltage. Injecting voltage may change the balance-imbalance of the current and the voltage. The balance-imbalance may be three-phase symmetry or asymmetry. In some embodiments, the shunt connected converter balances the current by injecting current. In some embodiments, the series connected converter balances the voltage by injecting voltage.

The HT and controlling the HT provides a balancing possibility for both, current and voltage. Further, the PQ may be enhanced, PEET application may be extended, and/or cost may be reduced. The HT may act as a decentralized balancing means.

Various embodiments may preferably implement the following features.

Preferably, determining the voltage imbalance and/or the current imbalance based on the obtained first voltage, second voltage and/or first current comprises: determining, by a controller, a balancing voltage reference and/or a balancing current reference; and creating, by the controller, a voltage balancing signal and/or a current balancing signal based on an error between the first voltage, the second voltage and/or the first current and a corresponding one or two of the balancing voltage reference and/or balancing current reference; wherein controlling, based on the determined voltage imbalance and/or current imbalance, the shunt connected converter to inject the injection current and/or the series connected converter to inject the injection voltage for balancing the voltage and/or the current between the plurality of phases of the electric line is done based on the voltage balancing signal and the current balancing signal.

The controller may comprise a master controller and low-level controllers. The low-level controllers may be a first low-level controller to control the shunt connected converter and a second low level controller to control the series connected converter. The master controller may receive the first voltage, second voltage and/or first current. The voltage balancing signal and/or a current balancing signal may be created by the master controller or by the first and second low-level controllers.

The balancing voltage reference and/or balancing current reference may be provided in different mathematical coordinate systems, e.g. see (i) and (ii) below:
(i) If in the three-phase system: they can be a prescribed set of balanced three-phase waveform with identical magnitude, frequency, and phase angles that are displace by 120 degrees from each other.
(ii) If in the dq0 system: they can be provided by three DC quantities, and frequency and one phase angle information. The phase angle information may be information that define the angle alignment and rotation speed of the dq-coordinates.

Overall, the references may take different forms depending on the adopted coordinate system, nonetheless when transformed to the three-phase system they would indicate a set of three-phase balanced electrical voltage or current waveforms.

The balancing voltage reference and/or balancing current reference may be reference set points for voltage and/or current, respectively.

The error may be a difference (subtraction of the two values) or another formular based on the two values. The voltage imbalance and/or the current imbalance may be the corresponding error or the voltage imbalance and/or the current imbalance may express whether the voltage and/or current is balanced or imbalanced. The voltage imbalance may be and/or may be based on the error between the first voltage and the balancing voltage reference or the error between the second voltage and the balancing voltage reference. The current imbalance may be based on and/or may be the error between the first current and the balancing current reference.

Preferably, determining, by the controller, the balancing voltage reference and/or the balancing current reference comprises either defining the balancing voltage reference and/or balancing current reference based on the first voltage, the second voltage and/or the first current or receiving the balancing voltage reference and/or balancing current reference from a microgrid controller, a RES controller, a network controller, a distribution system operator, a transmission system operator, another HT or another grid asset.

Receiving the balancing voltage reference and/or balancing current reference from a microgrid controller, a RES controller, a network controller, a distribution system operator, a transmission system operator, another HT (or another HT system) or another grid asset may be receiving the balancing voltage reference and/or balancing current reference from outside of the HT system. This may be especially advantageous when the imbalance is not visible at the own HT (own first/second PCC). Other entities (from outside) may provide information about the imbalance. Then the (own) HT may counteract the (outside/global) imbalance. The network controller may be the grid controller.

In some embodiments, the network controller or the system operator identifies the total amount of unbalanced conditions to be counteracted against. Then it would send the balancing references to the individual HTs, such that they would all together reach the system-level balancing target.

Receiving the balancing voltage reference and/or balancing current reference from another HT (/HT system) may also be coordination between different HTs (/HT systems), including more than two HTs (/HT systems).

Preferably, the method further comprises: transmitting the voltage balancing signal and/or current balancing signal to the HT; and balancing, by the shunt connected converter by injecting the injection current and/or the series connected converter by injecting the injection voltage, voltage and/or current between the plurality of phases of the electric line based on the voltage and current balancing signals.

The voltage balancing signal may correspond to the injection voltage. The current balancing signal may correspond to the injection current. Injecting the injection voltage may influence the voltage in the phases of the electric line. Further, injecting the injection voltage may also influence the current in the phases of the electric line. Injecting the injection current may influence the current in the phases of the electric line. Further, injecting the injection current may also influence the voltage in the phases of the electric line. Such co-dependencies may be complicated. The (master) controller may consider such co-dependencies and determine the voltage balancing signal and the current balancing signal accordingly. This may happen through a central coordination controller comprised by the controller and/or master controller.

Preferably, the shunt connected converter is connected to the electric line in shunt by being connected to a second transformer which is connected to the electric line in shunt.

In such a case, the injected current is the current output from the second transformer to the electric line. The injected current is influenced by the current and/or voltage provided from the shunt connected converter to the second transformer. The second transformer may be comprised by the HT.

Preferably, a distribution transformer (DT) is connected to the electric line on a side opposite to the first transformer of where the shunt connected converter is connected in shunt.

This may mean that the order of the components along the electric line is: distribution transformer, shunt connection of shunt connected converter, first transformer. The distribution transformer may be not part of the HT.

Preferably, the second transformer has three windings: a first winding of the three windings connected to a first section of the electric line; a second winding of the three windings connected to a second section of the electric line; and a third winding of the three windings connected to the shunt connected converter. This may result in the electric line being interrupted into the first section and the second section. In a way, the second transformer may be the shunt connection in this example.

Preferably, the voltage imbalance and/or current imbalance based on the obtained first voltage, second voltage and/or first current is determined by: a difference in magnitudes of different phases of the plurality of phases of the first voltage, second voltage and/or first current exceeds a first threshold; and/or a phase angle difference between different phases of the plurality of phases of the first voltage, second voltage and/or first current exceeds a second threshold.

Another approach to identify an imbalance condition is to perform summation on the three-phase quantity. If the sum is zero the system is balanced, if it is non-zero then the condition is unbalanced.

Preferably, determining the voltage imbalance and/or the current imbalance is further based on the balancing voltage reference and/or balancing current reference.

The balancing voltage reference and/or balancing current reference may be received from outside (see for example as mentioned above). The motivation for this case may be that at the PCCs of the HT, a strong unbalanced condition is not reflected, but in another part of the grid, the unbalanced conditions are observed. Then a triggering signal or balancing references can be communicated to the HT to start its balancing. In this way, the HT would inject a balancing current and/or voltage component into the grid, that would help the grid to globally reach a more balanced operating condition.

The balancing voltage reference and/or balance current reference from outside may be only sent from the outside device if the imbalance in another part of the grid (other than the HT receiving the balancing reference) is bigger than a threshold. It is noted that having some (relatively small) unbalanced content in the distribution grid may not be problematic. But rather it may be required to not pass the unbalanced content to the MV or HV grid. Therefore, the balancing feature of HT may help to realize the balancing objective at the feeder connected to higher voltage levels.

The present disclosure also relates to a computer program comprising instructions which, when the computer program is executed by a computer, cause the computer to carry out the described method.

The computer program may run on the controller. The controller may be a processor, a computer, a server, and/or a raspberry pi, and/or the like.

The present disclosure also relates to a hybrid transformer, HT, system comprising: an electric line with a plurality of phases; a first transformer connected to the electric line in series; a converter module connected on a first side to the electric line in shunt, and on a second side of the converter module, opposite to the first side, to the first transformer; and a controller; wherein the converter module comprises a shunt connected converter with an alternating current, AC; side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link; wherein the controller is configured to: obtain a first voltage of each of a plurality of phases of the electric line at a first point of common coupling, first PCC, where the shunt connected converter is connected to the electric line in shunt, a second voltage of each of the plurality of phases of the electric line at a second point of common coupling, second PCC, where the first transformer is connected to the electric line, and a first current of each of the plurality of phases of the electric line at the second PCC; determine a voltage imbalance and/or a current imbalance based on the obtained first voltage, second voltage and/or first current; and control, based on the determined voltage imbalance and/or current imbalance, the shunt connected converter to inject an injection current and/or the series connected converter to inject an injection voltage for balancing a voltage and/or a current between the plurality of phases of the electric line.

The HT may be used for many different purposes including the described balancing services. Therefore, one HT may replace a plurality of other devices. Also, the HT may use a reduced number of modules compared to previous solutions.

Preferably, the shunt connected converter is connected to the electric line in shunt by being connected to a second transformer which is connected to the electric line in shunt. The second transformer may be comprised by the HT.

Preferably, a distribution transformer is connected to the electric line on a side opposite to the first transformer of where the shunt connected converter is connected in shunt.

Preferably, the HT system further comprises a DC/DC converter connected to the DC link in series or in shunt.

Preferably, the HT system further comprises an electric storage system connected to the DC link with or without a dedicated DC-DC converter in series or in shunt.

Preferably, the HT system further comprises a master controller configured to determine a balancing voltage reference and/or balancing current reference, and to provide a voltage balancing signal and/or a current balancing signal, or the balancing voltage reference and balancing current reference; and the HT system further comprising a first low-level controller associated with the shunt connected converter and a second low-level controller associated with the series connected converter, wherein the voltage balancing signal and/or the current balancing signal are used by the first low-level controller and the second low-level controller to control the shunt connected converter and the series connected converter.

In different embodiments, the voltage balancing signals and/or current balancing signals may be calculated in the master controller or in the low-level controllers.

The disclosed HT systems may be placed throughout a power grid. They may be decentralized balancing means.

Examples, alternatives, advantages and other explanations for some of these aspects are explained at other parts of this disclosure.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1a shows an exemplary HT according to an embodiment of the present disclosure.
Fig. 1b shows another exemplary HT according to an embodiment of the present disclosure.
Fig. 2 shows the HT with a controller according to an embodiment of the present disclosure.
Fig. 3 shows a flowchart of a method applied by the HT and controller, for example as shown in fig. 2, according to an embodiment of the present disclosure.
Fig. 4 shows different embodiments of the present disclosure for the DC link attached between the shunt connected converter and the current connected converter.

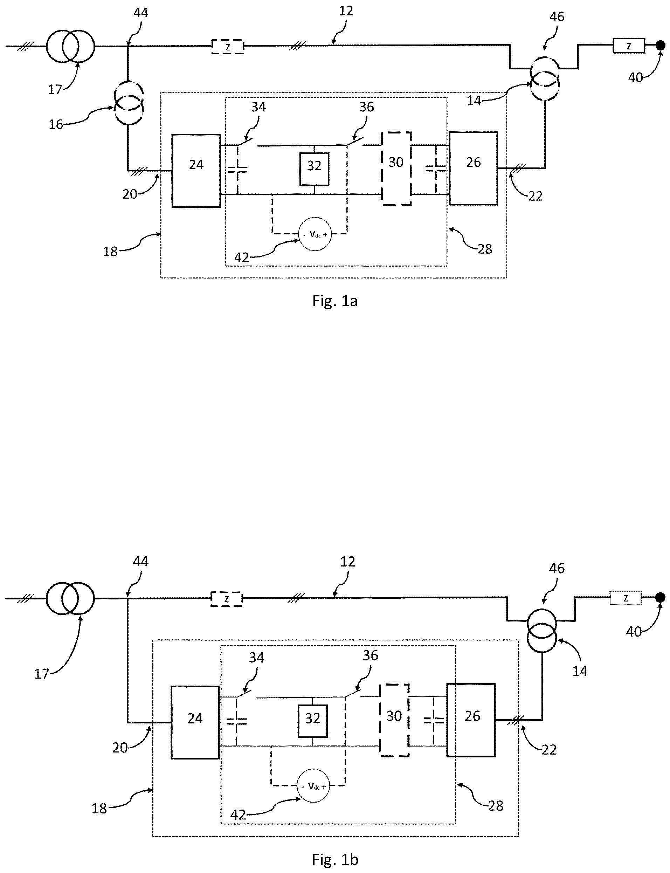

Fig. 1a shows an exemplary HT 10 and a distribution transformer 17. The hybrid transformer (HT) 10 comprises an electric line 12 with a plurality of phases, a first transformer 14 connected to the electric line 12 in series, a second transformer 16, and a converter module 18 connected on a first side 20 to the electric line 12 in shunt and the second transformer 16, and a second side 22 of the converter module 18, opposite to the first side 20, being connected to the first transformer 14.

The converter module 18 comprises a shunt connected converter 24 with an alternating current (AC) side (to the left, towards the second transformer 16) which is the first side 20 of the converter module 18, and the converter module 18 further comprises a series connected converter 26 with an AC side (to the right, towards the first transformer 14) of the series connected converter 26 which is the second side 22 of the converter module 18 , wherein a direct current (DC) side of the shunt connected converter 24 (to the right) is connected to a DC side of the series connected converter 26 (to the left) by a DC link 28.

The DC link 28 comprises a DC/DC converter 30 connected to the DC link in series. In an alternative, the DC/DC converter 30 may be connected in shunt. The DC link 28 further comprises an electric storage system (ESS) 32 connected to the DC link with or without a dedicated DC-DC converter in series or in shunt. The HT 10 further comprises a switch 34 which is connected in the DC link 28 in series. The switch 34 is optional. The switch 34 may be placed at another place in the DC link 28 between the shunt connected converter 24 and the series connected converter 26. The HT 10 further comprises switch 36. The switch 36 is similar to switch 34 optionally placed in the DC link. The DC link 28 may further comprise one or both of capacitors in parallel with the shunt connected converter 24 and the series connected converter 26 on either side of the DC/DC converter 30, respectively.

The electric line 12 has three phases shown by the three diagonal lines in the electric line 12 in this figure. The impedance (z) of the electric line 12 is also shown in this figure as separate part. The electric line 12 extends from the variable transformer 38 (on the left) to the node 40 (on the right). In some embodiments, the electric line may further extend beyond the variable transformer 38 (on the left) and/or beyond the node 40 (on the right). In some embodiments, the electric line 12 may not be regarded as part of the HT 10, but the HT 10 would be (configured to be) connected to the electric line 12. On the other side of the variable transformer 38 as seen from the shunt connection, the variable transformer 38 may be connected to a grid, in this example a MV grid. On the outer side of the node 40, it is connected to another grid, in this example a LV grid. In other examples, the grids may be different, for example, the shown MV grid may be a HV grid, and the shown LV grid may be a MV grid.

The shunt connected converter 24 and the series connected converter 26 may be a different or the same kind of AC/DC converter. Possible products/applications are: statcom (static synchronous compensator), rectifiers, active filters, etc..

The first transformer 14 at the shown position is optional. The second transformer 16 may be omitted. In alternatives, the shunt connected converter 24 may be connected directly to the electric line 12 in shunt. In this figure, the shunt connected converter 24 is connected to the electric line 12 in shunt by being connected to the second transformer 16 which is connected to the electric line 12 in shunt. The distribution transformer 17 is connected to the electric line 12 on a side opposite to the first transformer 14 of where the shunt connected converter 24 is connected in shunt.

The first transformer 14 may be connected to the electric line 12 in series in different ways. In some embodiments, one winding (possibly being three windings due to the plurality of phases) of the first transformer 14 is connected to the electric line 12 in series, such that the one winding could be regarded as part of the electric line 12 just wound. The other winding (possibly being three windings due to the plurality of phases) of the first transformer 14 is at one end connected to the series connected converter 26 and the other end is connected to a node (may be different to node 40; may be a node with no further connections to it) - wherein the node has a plurality (maybe three) ends connected to it due to the plurality of phases.

The first PCC 44 is where the shunt connected converter 24 is connected to the electric line 12 in shunt. The first PCC 44 may be on the electric line 12. The first PCC 44 may be at the point of the shunt connection, or just towards the first transformer 14 (just a little to the right), or just away from the first transformer 14 (just a little to the left). The position of the first PCC 44 (just as for the second PCC 46) may be regarded as identical on any point along an uninterrupted conductor, wherein uninterrupted may mean without other electrical components and without nodes. It is noted that the current and/or voltage values at these different positions of the first PCC 44 can be calculated from each other. For example, the current just right of the position of the shunt connection is equal to the current just left of the shunt connection plus the injection current coming from the shunt connected converter 24/ the second transformer 16 (when present as shown in this figure).

The second PCC 46 is where the first transformer 14 is connected to the electric line 12. The second PCC 46 may be on the electric line 12 just on either side of the first transformer 14.

Corresponding voltage measurement devices and/or current measurement devices may be comprised, at the first PCC 44 and/or the second PCC 46, to measure the first voltage, second voltage and/or first current, respectively.

The HT 10 may further comprise a voltage measurement device 42. The voltage measurement device 42 measures a voltage in the DC link 28, for example of the ESS 32. In some embodiments, the DC link 28 may only be the conductors, without the ESS 32 and DC/DC converter 30.

In some embodiments, the DC-link 28 may be connected to a separate DC grid, i.e., the HT serves as the interface between the AC and DC grids.

The ESS 32 may comprise one or more of the following: one or more capacitors, one or more batteries, one or more super caps, one or more super batteries, and any other energy storage element.

Fig. 1b shows another exemplary HT according to an embodiment of the present disclosure. The HT of fig. 1b is mostly similar to the HT of fig. 1a. For similarities, it is kindly referred to the description of fig. 1a. The HT of fig. 1b is different from the HT of fig. 1a in that there is no second transformer 16. In fig. 1b, the shunt connected converter 24 is directly connected to the electric line 12 in shunt.

In fig. 1a, the shunt connected converter 24 is connected to the electric line 12 in shunt by being connected to the second transformer 16 which is connected to the electric line 12 in shunt.

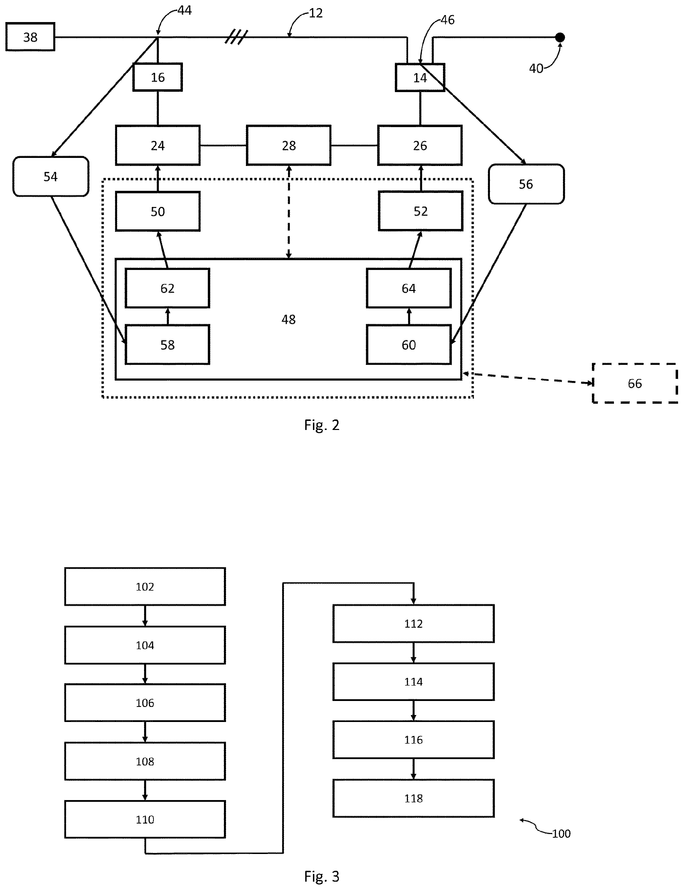

Fig. 2 shows the HT 10 with a controller. Fig. 3 shows a flowchart of a method 100 applied by the HT 10 and a controller, for example as shown in fig. 2.

Fig. 2 shows a simplified drawing of the HT 10 and a controller. The HT 10 may be as described above (also for fig. 1). To avoid repetitions, the disclosure from above is herewith included also here (same reference numerals in fig. 2 indicate the same entities as in fig. 1). The controller (shown as dotted line around other entities) comprises a master controller 48, a first low-level controller 50 and a second low-level controller 52. The master controller 48 may further comprise a central coordination controller (not shown) which coordinates the balance between the sides of the shunt connected converter 24 (with 54, 58, 62, and 50) and the series connected converter 26 (with 56, 60, 64, and 52). Further, first measurements 54 from the first PCC 44 and second measurements 56 form the second PCC 46 are shown. The first measurements 54 may be examples of the first voltage. The second measurements 56 may be examples of the second voltage and/or first current. The master controller 48 comprises two G-dq0 units 58 and 60 (which may be bundled into one G-dq0 unit), and two balancing control units 62 and 64 (which may be bundled into one balancing control unit). The master controller 48 may also control the DC link 28. Fig. 2 further shows a high-level controller (e.g. a grid controller 66) to be described below with reference to fig. 3.

The G-dq0 units 58 and 60 may transform between the mathematical coordinate systems of the three-phase system and the dq0 system. Transformations between other mathematical systems are possible in other embodiments.

Method 100, shown in fig. 3, may be applied by the devices of fig. 2. Method 100 may be used to realize the balancing control feature of the HT 10. The method 100 may comprise steps 102 to 118, preferably in that order.

In step 102, the measurements 54 and 56 (currents and voltages) are acquired from the sensors connected to the first PCC 44 and second PCC 46, respectively. The measurements 54 and 56 may comprise the first voltage, second voltage and first current. Step 102 also or alternatively be the obtaining of: a first voltage of each of the plurality of phases of the electric line at a first point of common coupling, PCC, 44 where the shunt connected converter is connected to the electric line in shunt, a second voltage of each of the plurality of phases of the electric line at a second PCC, 46 where the first transformer is connected to the electric line, and a first current of each of the plurality of phases of the electric line at the second PCC 46.

In step 104, the required standard signal-processing/conditioning are performed on the measured signals.

In step 106, the conditioned measurements may be provided to a high-level controller (may be a grid controller 66 (or another HT or another grid asset, outside as described above) or the master controller 48 or a part of the master controller 48). This high-level controller may take care of the system-level behavior of the HT 10, especially in view of interaction with the entire grid(s). This high-level controller may coordinate the balancing features of the shunt connected converter 24 and series connected converter 26 inside the HT 10 (i.e., if both converters are providing the balancing service, or just one, or it can change the operation as desired). A few options are possible (see a to d as follows):
a. The high-level controller may be a model-based controller that defines the balancing current/voltage references for the converters 24 and 26.
b. The high-level controller may be the grid controller 66 and/or may be placed not within the HT controller hardware but at the network control unit or at the DSO level. And communicates the required references for HT and its underlying converters.
c. The high-level control may be a data-driven controller (e.g., Al/ML-based, etc.) that provides the references.
d. Finally, the references are directly received from other grid assets, e.g., other converter units or HTs in the grid. In this option, the high-level controller may be the grid controller 66 (or another outside asset).

References, as for example balancing voltage reference and/or balancing current reference, may be received from the grid controller 66 (or another outside asset) by the master controller 48.

The high-level controller defines the (voltage and/or current) balancing through the shunt connected converter 24 and the series connected converter 26. The balancing voltage reference and/or balancing current reference can be locally defined (/determined by the controller) based on the local voltage and/or current measurements 54 and 56 available. Alternatively, the balancing voltage reference and/or balancing current reference can also be externally provided, for example by: a grid controller 66 that decides when the HT shall provide the balancing service; the distribution system operator (DSO) or transmission system operator (TSO); other HTs in the grid; or other grid assets.

The balancing controller activation can be identified locally. For example, if the imbalance content in the current and /or voltage measurements (may correspond to voltage imbalance and/or a current imbalance) of the HT 10 exceeds certain limits balancing may be initiated. Conditions for voltage imbalance and/or a current imbalance may be: the measure of imbalance content can be magnitude difference between per-phase signals; phase angle difference between the per-phase signals; or a combination of both measures.

In some embodiments, the balancing control activation can be defined externally, based on unbalanced condition in different parts of the grid.

Once the balancing control activation requirements are met, then the balancing can be applied through: either both the shunt connected converter 24 and the series connected converter 26; or one of the shunt connected converter 24 and the series connected converter 26; or first to one of the converters and then to the other converter (of the shunt connected converter 24 and the series connected converter 26).

Alternatively or additionally, step 106 may comprise or be: determining a voltage imbalance and/or a current imbalance based on the obtained first voltage, second voltage and/or first current.

In step 108, the obtained (and possibly signal-processed/conditioned) measurements 54 and 56 and references (for example balancing voltage reference and/or balancing current reference) are provided to the coordinate transformation block (the two G-dq0 units 58 and 60); this(/these) block(s) transform(s) the references and measurements 54 and 56 to the desired coordinate system that is suitable for the unbalanced systems control design.

In some embodiments, steps 106 and 108 may be exchanged in order such that step 106 is implemented on the transformed measurements.

In step 110, the transformed measurements and references are provided to the balancing controllers 62 and 64 associated with the shunt connected converter 24 and the series connected converter 26, respectively. The balancing controllers 62 and 64 can be model-based controllers. Alternatively, the balancing controllers 62 and 64 can be data-driven type controllers. The balancing controllers 62 and 64 may provide the desired control references to the first and low-level controllers 50 and 52.

In step 112, the low-level controllers 50 and 52 define the reference modulation signal references to the inverse transformation block. The low-level controllers 50 and 52 can be either model-based or data-driven and ensure proper internal operation of the HT.

In step 114, the modulation references are transformed from the control design coordinates back to the three-phase system that is the same as the original measurement coordinate systems. The system of fig. 2 may additionally comprise corresponding transformation units.

In step 116 the (transformed) modulation references are provided in three-phase coordinate systems to the modulation control systems (not explicitly shown) associated with the shunt connected converter 24 and the series connected converter 26.

In step 118, the gate signals are generated to be applied to the shunt connected converter 24 and the series connected converter 26.

In some embodiments, one or more of steps 112 to 118 may be or comprise: controlling, based on the determined voltage imbalance and/or current imbalance, the shunt connected converter to inject an injection current and/or the series connected converter to inject an injection voltage for balancing the magnitudes and/or phase angles of a voltage and/or a current between the plurality of phases of the electric line.

In a first embodiment, a voltage-based balancing approach is implemented through the series connected converter 26: In this approach the current on low-voltage side (i.e., the second PCC 46) is measured. If this current measurement 56 indicates an imbalance in the three-phase system of the electric line 12, then the balancing control strategy, controls the converter voltage in the series connected converter 26 such that a desired balancing voltage is imposed by the first transformer 14 that cancels out or reduces the current imbalance (possibly within margins). Thus, the low-voltage feeder may draw a balanced current from the MV feeder. The voltage level change needed to reduce the current imbalance may remain within the DSO required standards.

In a second embodiment, a current-based balancing approach is implemented. In a first scenario of the second embodiment: the current is measured on the LV side (i.e., first PCC 44; measured current may alternatively be derived from first current). If this current indicates an imbalance, then the balancing controller 50 controls the shunt connected converter 24, such that a desired balancing current is injected such that the current balance is restored. In a second scenario of the second embodiment: the voltage is measured on the LV side (i.e., first PCC 44). If this voltage indicates an imbalance, then the balancing controller 50 controls the shunt connected converter 24, such that a desired balancing current is injected such that the voltage balance is restored.

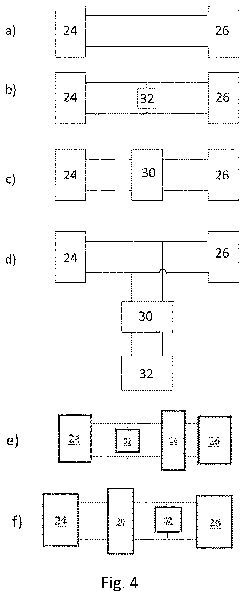

Fig. 4 shows different embodiments for the DC link 28 attached between the shunt connected converter 24 and the current connected converter 26. Any of these embodiments may replace the shown DC links 28 in the HTs 10 disclosed. In embodiment a), the DC link is only the conductors. In embodiment b), an ESS 32 is connected in parallel to the converter. In embodiment c), a DC/DC converter 30 is connected between the converter 24 and 26. In embodiment d), an ESS 32 and a DC/DC converter 30 are connected in shunt to the DC link 28. In embodiments e) and f), an ESS 32 and a DC/DC converter 30 are connected in parallel to the converters; in embodiment e) with the ESS 32 closer to the shunt connected converter 24; and in embodiment f) with the DC/DC converter 30 closer to the shunt connected converter 24.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for controlling a hybrid transformer, HT, comprising an electric line with a plurality of phases, a first transformer connected to the electric line in series, and a converter module connected on a first side to the electric line in shunt, and a second side of the converter module, opposite to the first side, being connected to the first transformer;
wherein the converter module comprises a shunt connected converter with an alternating current, AC, side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link, the method comprising:
obtaining:
a first voltage of each of the plurality of phases of the electric line at a first point of common coupling, PCC, where the shunt connected converter is connected to the electric line in shunt,
a second voltage of each of the plurality of phases of the electric line at a second PCC, where the first transformer is connected to the electric line, and
a first current of each of the plurality of phases of the electric line at the second PCC;
determining a voltage imbalance and/or a current imbalance based on the obtained first voltage, second voltage and/or first current; and
controlling, based on the determined voltage imbalance and/or current imbalance, the shunt connected converter to inject an injection current and/or the series connected converter to inject an injection voltage for balancing the magnitudes and/or phase angles of a voltage and/or a current between the plurality of phases of the electric line.

2. Method of claim 1, wherein determining the voltage imbalance and/or the current imbalance based on the obtained first voltage, second voltage and/or first current comprises:
determining, by a controller, a balancing voltage reference and/or a balancing current reference; and
creating, by the controller, a voltage balancing signal and/or a current balancing signal based on an error between the first voltage, the second voltage and/or the first current and a corresponding one or two of the balancing voltage reference and/or balancing current reference;
wherein controlling, based on the determined voltage imbalance and/or current imbalance, the shunt connected converter to inject the injection current and/or the series connected converter to inject the injection voltage for balancing the voltage and/or the current between the plurality of phases of the electric line is done based on the voltage balancing signal and the current balancing signal.

3. Method of claim 2, wherein determining, by the controller, the balancing voltage reference and/or the balancing current reference comprises either defining the balancing voltage reference and/or balancing current reference based on the first voltage, the second voltage and/or the first current or receiving the balancing voltage reference and/or balancing current reference from a microgrid controller, a RES controller, a network controller, a distribution system operator, a transmission system operator, another HT or another grid asset.

4. Method of any one of claims 1 to 3, the method further comprises:
transmitting the voltage balancing signal and/or current balancing signal to the HT; and
balancing, by the shunt connected converter by injecting the injection current and/or the series connected converter by injecting the injection voltage, voltage and/or current between the plurality of phases of the electric line based on the voltage and current balancing signals.

5. Method of any one of claims 1 to 4, wherein the shunt connected converter is connected to the electric line in shunt by being connected to a second transformer which is connected to the electric line in shunt.

6. Method of any one of claims 1 to 5, wherein the voltage imbalance and/or current imbalance based on the obtained first voltage, second voltage and/or first current is determined by:
a difference in magnitudes of different phases of the plurality of phases of the first voltage, second voltage and/or first current exceeds a first threshold; and/or
a phase angle difference between different phases of the plurality of phases of the first voltage, second voltage and/or first current exceeds a second threshold.

7. Method of any one of claims 2 to 6, when dependent on claim 2, wherein determining the voltage imbalance and/or the current imbalance is further based on the balancing voltage reference and/or balancing current reference.

8. A computer program comprising instructions which, when the computer program is executed by a computer, cause the computer to carry out the method of any one of claims 1 to 7.

9. A hybrid transformer, HT, system comprising:
an electric line with a plurality of phases;
a first transformer connected to the electric line in series;
a converter module connected on a first side to the electric line in shunt, and on a second side of the converter module, opposite to the first side, to the first transformer; and
a controller;
wherein the converter module comprises a shunt connected converter with an alternating current, AC; side which is the first side of the converter module, and the converter module further comprises a series connected converter with an AC side of the series connected converter which is the second side of the converter module, wherein a direct current, DC, side of the shunt connected converter is connected to a DC side of the series connected converter by a DC link;
wherein the controller is configured to:
obtain
a first voltage of each of a plurality of phases of the electric line at a first point of common coupling, first PCC, where the shunt connected converter is connected to the electric line in shunt,
a second voltage of each of the plurality of phases of the electric line at a second point of common coupling, second PCC, where the first transformer is connected to the electric line, and
a first current of each of the plurality of phases of the electric line at the second PCC;
determine a voltage imbalance and/or a current imbalance based on the obtained first voltage, second voltage and/or first current; and
control, based on the determined voltage imbalance and/or current imbalance, the shunt connected converter to inject an injection current and/or the series connected converter to inject an injection voltage for balancing a voltage and/or a current between the plurality of phases of the electric line.

10. HT system of claim 9, wherein the shunt connected converter is connected to the electric line in shunt by being connected to a second transformer which is connected to the electric line in shunt.

11. HT system of claim 9 or 10, further comprising a DC/DC converter connected to the DC link in series or in shunt.

12. HT system of any one of claims 9 to 11, further comprising an electric storage system connected to the DC link with or without a dedicated DC-DC converter in series or in shunt.

13. HT system of any one of claims 9 to 12, further comprising a master controller configured to determine a balancing voltage reference and/or balancing current reference, and to provide a voltage balancing signal and/or a current balancing signal, or the balancing voltage reference and balancing current reference; and
the HT system further comprising a first low-level controller associated with the shunt connected converter and a second low-level controller associated with the series connected converter, wherein the voltage balancing signal and/or the current balancing signal are used by the first low-level controller and the second low-level controller to control the shunt connected converter and the series connected converter.
